# EUROPEAN PATENT SPECIFICATION

(11) **EP 1 075 607 B1**
(45) Date of publication and mention of the grant of the patent: **25.06.2003**
(21) Application number: 99918150.6
(22) Date of filing: 22.04.1999
(51) Int. Cl.: F16D 65/853, F16D 55/36

(54) **LIQUID-IMMERSED DISC BRAKE**
NASSLAUFENDE SCHEIBENBREMSE
FREIN A DISQUE IMMERGE DANS UN LIQUIDE

(30) Priority: 25.04.1998 GB 9808765
(43) Date of publication of application: 14.02.2001
(73) Proprietor: Meritor Heavy Vehicle Braking Systems (UK) Limited, Reading, Berkshire RG6 1LA (GB)
(72) Inventor: MUELLER, Jan-Peter, D-83607 Holzkirchen (DE)
(74) Representative: Jones, John Bryn
(86) International application number: GB9901243
(87) International publication number: WO99056031

(56) References cited:
- EP-A- 0 530 155
- EP-A- 0 538 023
- EP-A- 0 669 219
- US-A- 2 148 818
- US-A- 2 620 900
- US-A- 4 566 563

## Description

This invention relates to a liquid-immersed disc brake, primarily for a vehicle, the brake having a housing which contains at least one friction element rotatable with a rotary member to be braked and providing a first braking surface, a torque-resisting member providing a second braking surface which is relatively fixed, actuator means operable to bring the first and second surfaces into braking engagement, and means for supplying cooling liquid to the housing in cooling relationship with said surfaces.

EP-A-053 8023 shows one form of liquid-immersed disc brake.

It can be advantageous in some liquid-immersed disc brakes to supply cooling oil into the housing along a rotary member to be braked, such as a shaft, but it can then be difficult to direct the oil from the interior of the member to a required location in the brake, or distribute the oil evenly within the brake in adequate quantities. Difficulties can also arise in providing an adequate rotary seal between the rotary member and the exterior and/or the interior of the brake housing.

An object of the invention is to provide an improved liquid-immersed disc brake in which the aforesaid difficulties are alleviated or avoided.

Thus according to the present invention there is provided a liquid-immersed disc brake according to claim 1.

Preferably the rotary member to be braked is drivingly connected to said at least one friction element via an intermediate member which provides a further part of said path serving to direct the introduced liquid towards said region.

In one typical arrangement, the rotary member is a shaft and the intermediate member is a sleeve surrounding and keyed to the shaft, preferably by one or more interengaged splines respectively on the shaft and sleeve, the sleeve being also keyed to said at least one friction element so as to be fast for rotation with the element and to permit axial movement of the at least one element along the shaft, the sleeve having one or more passages therein forming part of said path, and preferably extending radially through the sleeve peripheral wall.

Preferably, the core member is supported by the pressure plates and, in one convenient arrangement in which a pair of separable pressure plates is provided, the core member is fast for axial movement with one plate and axially slidable relative to the other plate.

The core member may conveniently be formed integrally with said one pressure plate.

The invention will now be described, by way of example, with reference to the single accompanying drawing which is a longitudinal cross-section of one form of the liquid-immersed disc brake of the invention.

The illustrated oil immersed disc brake has a housing 1, through which extends a rotary member to be braked, illustrated as a shaft 2 rotatably mounted in the housing. The shaft is externally splined at 3 and surrounded by a sleeve 4 which has complementary internal splines 5 engaged with those of the shaft so that the sleeve is rotatably keyed to the shaft. The sleeve is also externally splined at 6 and carries a plurality of rotary friction discs 7 which are arranged in two axially spaced groups and keyed to the external splines 6 of the sleeve by way of projecting lugs 8 so as to be fast for rotation with the sleeve but axially movable relative thereto, when required. Interleaved with the rotary discs 7 are further friction discs 9 which freely surround the shaft and are keyed against rotation in the housing by way of one or more abutment pins 9A. Disposed between the groups of discs is a pair of actuator plates 10, 11, which are separable by a convenient form of primary actuator, such as a ball and ramp, wedge or other mechanism, to compress the groups of friction discs between opposed pairs of braking surfaces 12, 13 formed respectively on the internal surface of the housing and on the actuator plates 10 and 11, braking torque arising on the actuator plates being resisted by the housing, in known manner.

The invention is particularly concerned with the manner in which cooling liquid is supplied to the friction discs at least during braking. Liquid enters the brake via a pipe 15 connected to an external boss 16, of which a smaller diameter portion 17 is screwed into the housing. A sealing device, indicated generally at 18 includes an annular collar 19 mounted in the housing by way of pins 20 and being urged by at least one spring 21 against the adjacent end of the shaft 2. The collar 19 carries a seal element 22, which largely precludes the flow of oil around the outside of the collar and ensures that oil flows predominantly from the boss 16 along a central axial passage 23 of the shaft and into radial passages 24 which direct the liquid into the interior of the sleeve 4. The seal element 22 seals against the end face of the shaft around the entrance to the passage 23. The sleeve 4 is provided, at locations conveniently adjacent the groups of disc 7, 9, with radial through holes 25 providing communication between the interior of the sleeve and optimum locations within the housing for distribution of liquid to the plates. Liquid entering the interior of the sleeve via the radial passages 24 is able to pass along axial passages formed by the shaft splines and those of the surrounding sleeve and thence through the holes 25 to the aforesaid locations. Appropriate internal splines of the sleeve 4, or splines of the shaft 3, or both such splines, may be omitted to provide a flow path of increased volume.

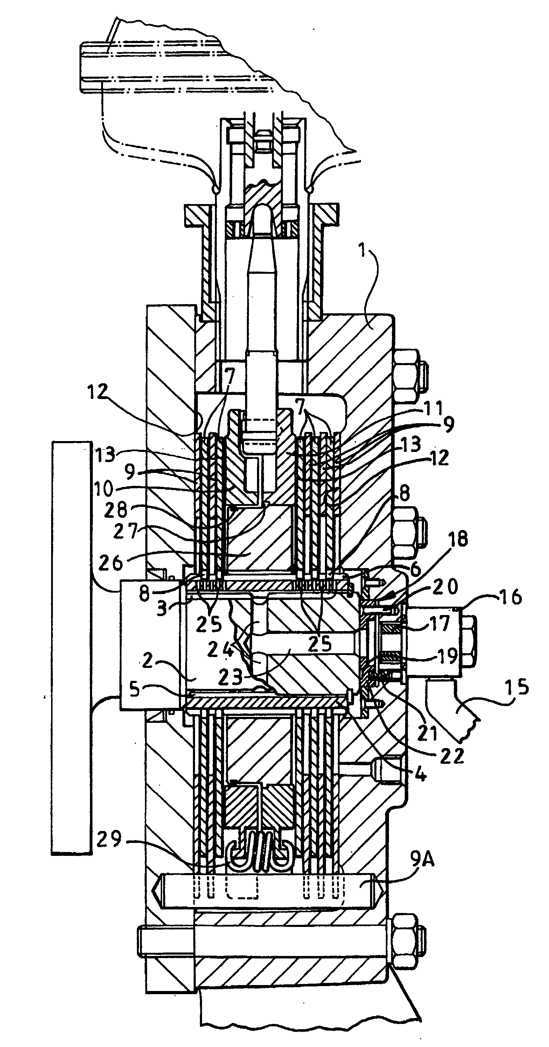

A further feature of the described embodiment resides in the provision of an annular core member 26, of metal or plastics material for example, which lies in the space defined in part by each of the radially innermost surfaces of the actuator plates 10, 11, the inner surfaces of the innermost plates 7 and the external surface of the shaft 2. The core member 26 is mounted securely on the actuator plate 11, as by press fitting for example, the plate 11 having an annular recess within which is received a small annular shoulder 27 of the core member. The other actuator plate 10 is slidably mounted around the core member, a seal 28 being provided between the plate 10 and core member. The seal 28 prevents oil escaping through the actuation plates 10 and 11 when they are moved apart for brake actuation. In certain instances, it may be convenient to manufacture the core 26 and pressure plate 11 as a unitary component. It will be seen that, upon separation of the plates 10 and 11 for brake actuation, the core member 26 moves with the plate 11, whilst performing a sliding movement relative to the plate 10. The function of the core member is to minimise the liquid capacity of the brake by filling a redundant area which would otherwise fill with cooling liquid during brake actuation. In order to accommodate the core member, return springs 29 for the actuator plates 10 and 11, one of which springs can be seen in the drawing, are accommodated in a radially outer region of the housing rather than, in conventional manner, in the central region of the brake.

It would be possible to dispense with the sleeve 4 and provide radial passages within the shaft, opening at locations adjacent the friction plates, or at other appropriate locations, the numbers and locations of such passages, whether in a sleeve 4 or in the shaft, being variable as required. It would also be possible to dispense with the sealing collar 19 and to arrange, for example, for an extension of the shaft 2 to protrude through the adjacent wall of the housing 1 into the boss 16, in which an appropriate sealing arrangement may be incorporated.

## Claims

1. A liquid-immersed disc brake comprising a housing (1) containing at least one friction element (7) rotatable with a rotary member (2) to be braked and providing a first braking surface, a torque-resisting member (9) providing a second braking surface which is relatively fixed, actuator means operable to bring the first and second surfaces into braking engagement, the actuator means including at least one annular pressure plate (11) operable to move the friction element axially to cause engagement of the braking surfaces, the housing further including means for receiving cooling liquid in cooling relationship with said surfaces, **characterised in that** the pressure plate (11) surroundings a core member (26) which is supported for longitudinal movement relative to the rotary member and substantially fills the annular space formed between the exterior of the rotary member and the internal extremity of the or each plate (10, 11).

2. A brake according to Claim 1, wherein the core member (26) is supported by the pressure plate (11).

3. A brake according to Claim 2, wherein a pair of separable pressure plates (10, 11) is provided and the core member (26) is fast for axial movement with one plate (11) and axially slidable relative to the other plate (10).

4. A brake according to Claim 3, wherein the core member is formed integrally with said one pressure plate.

5. A brake according to any one of the preceding claims, comprising means for supplying cooling liquid to the housing (1) in cooling relationship with said surfaces, the rotary member providing at least a part of a path (23, 24) serving to direct liquid which has been introduced to the housing towards a region from which the introduced liquid is applied to said braking surfaces.

6. A brake according to Claim 5, wherein the rotary member (2) to be braked is drivingly connected to said at least one friction element via an intermediate member (4) which provides a further part (25) of said path serving to direct introduced liquid towards said region.

7. A brake according to Claim 6, wherein the rotary member is a shaft (2) and the intermediate member is a sleeve (4) surrounding and keyed to the shaft, the sleeve being also keyed to said at least one friction element (7) so as to be fast for rotation with the element and to permit movement of the at least one element along the shaft, the sleeve having one or more passages (25) therein forming part of said path.

8. A brake according to Claim 7, wherein the sleeve passages (25) extend generally radially through the sleeve peripheral wall.

9. A brake according to Claim 7 or Claim 8, wherein the shaft has an axially extending passage (25) forming part of said path.

10. A brake according to Claim 9, wherein cooling is delivered through an end of the shaft to said axially extending passage by way of a sealing device (18) which includes a sealing element (22) urged against said shaft end and surrounding the adjacent end of the passage.

11. A brake according to any one of Claims 7 to 10, wherein the sleeve is keyed to the shaft by splines respectively on the sleeve and shaft, at least one inter-engaging pair of said splines forming a passage serving as part of said path.

## Patentansprüche

1. Eine in einer Flüssigkeit laufende Scheibenbremse mit einem Gehäuse (1), das wenigstens ein Reibungselement (7) enthält, das mit einem rotierenden, zu bremsenden Teil (2) drehbar ist und eine erste Bremsfläche bereitstellt, einem dem Drehmoment widerstehenden Teil (9), das eine zweite Bremsfläche bereitstellt, die relativ befestigt ist, einer Betätigungseinrichtung, die so betätigbar ist, dass sie die erste und die zweite Fläche in Bremseingriff bringt, wobei die Betätigungseinrichtung wenigstens eine ringförmige Druckplatte (11) aufweist, die so betätigbar ist, dass sie das Reibungselement axial bewegt, um einen Eingriff der Bremsflächen zu bewirken, wobei das Gehäuse außerdem eine Einrichtung zur Aufnahme von Kühlflüssigkeit in Kühlbeziehung zu den Flächen aufweist, **dadurch gekennzeichnet, dass** die Druckplatte (11) ein Kernteil (26) umgibt, das für eine Längsbewegung relativ zu dem rotierenden Teil abgestützt ist und im wesentlichen den ringförmigen Raum, der zwischen der Außenfläche des rotierenden Teils und dem inneren Ende der oder jeder Platte (10, 11) gebildet ist, ausfüllt.

2. Bremse nach Anspruch 1, bei der das Kernteil (26) durch die Druckplatte (11) abgestützt ist.

3. Bremse nach Anspruch 2, bei der ein Paar trennbarer Druckplatten (10, 11) vorgesehen ist und das Kemteil (26) für eine Axialbewegung mit einer Platte (11) feststehend ist und axial verschiebbar relativ zu der anderen Platte (10) ist.

4. Bremse nach Anspruch 3, bei der das Kernteil einstückig mit der einen Druckplatte gebildet ist.

5. Bremse nach einem der vorhergehenden Ansprüche, mit einer Einrichtung zur Zuführung von Kühlflüssigkeit zu dem Gehäuse (1) in Kühlbeziehung zu den Flächen, wobei das rotierende Teil wenigstens einen Abschnitt eines Wegs (23, 24) bereitstellt, der dazu dient, die Flüssigkeit, die dem Gehäuse zugeführt worden ist, zu einem Bereich zu lenken, von dem aus die zugeführte Flüssigkeit auf die Bremsflächen aufgebracht wird.

6. Bremse nach Anspruch 5, bei der das rotierende, zu bremsende Teil (2) antriebsmäßig mit dem wenigstens einen Reibungselement über ein Zwischenteil (4) verbunden ist, das einen weiteren Abschnitt (25) des Wegs bereitstellt, der dazu dient, die zugeführte Flüssigkeit zu dem Bereich zu lenken.

7. Bremse nach Anspruch 6, bei der das rotierende Teil eine Welle (2) ist und das Zwischenstück eine Hülse (4) ist, die die Welle umgibt und daran verkeilt ist, wobei die Hülse ebenfalls an dem wenigstens einen Reibungselement (7) verkeilt ist, um feststehend für eine Drehung mit dem Element zu sein und eine Bewegung des wenigstens einen Elements längs der Welle zu ermöglichen, wobei die Hülse einen oder mehrere Durchgänge (25) darin aufweist, die einen Abschnitt des Wegs bilden.

8. Bremse nach Anspruch 7, bei der die Durchgänge (25) der Hülse insgesamt radial durch die Umfangswand der Hülse verlaufen.

9. Bremse nach Anspruch 7 oder Anspruch 8, bei der die Welle einen axial verlaufenden Durchgang (25) hat, der einen Abschnitt des Wegs bildet.

10. Bremse nach Anspruch 9, bei der Kühlmittel durch ein Ende der Welle zu dem axial verlaufenden Durchgang mittels einer Dichtungsvorrichtung (18) zugeführt wird, die ein Dichtungselement (22) umfasst, das gegen das Ende der Welle gedrückt ist und das angrenzende Ende des Durchgangs umgibt.

11. Bremse nach einem der Ansprüche 7 bis 10, bei der die Hülse an der Welle durch Keile jeweils auf der Hülse und der Welle verkeilt ist, wobei wenigstens ein ineinander eingreifendes Paar der Keile einen Durchgang bildet, der als ein Abschnitt des Wegs dient.

## Revendications

1. Un frein à disque immergé dans un liquide, comprenant un boîtier (1) contenant au moins un élément de friction (7) susceptible de tourner avec un organe rotatif (2) à freiner et fournissant une première surface de freinage, un organe de résistance à un couple (9) fournissant une deuxième surface de freinage relativement fixe, des moyens actionneurs susceptibles de fonctionner pour placer les premières et deuxièmes surfaces en contact de freinage, les moyens actionneurs comprenant au moins une plaque de pression annulaire (11) susceptible de fonctionner pour déplacer axialement l'élément de friction pour provoquer la mise en contact des surfaces de freinage, le boîtier comprenant en outre des moyens pour recevoir du liquide de refroidissement en une relation de refroidissement avec lesdites surfaces, **caractérisé en ce que** la plaque de pression (11) entoure un organe formant noyau (26), qui est supporté pour effectuer un déplacement longitudinal par rapport à l'organe rotatif et qui remplit sensiblement l'espace annulaire formé entre l'extérieur de l'organe rotatif et l'extrémité interne de la ou de chaque plaque (10, 11).

2. Un frein selon la revendication 1, dans lequel l'organe formant noyau (26) est supporté par la plaque de pression (11).

3. Un frein selon la revendication 2, dans lequel une paire de plaques de pression (10, 11) séparables est prévue et l'organe formant noyau (26) est bloqué contre tout déplacement axial avec une plaque (11) et est susceptible de coulisser axialement par rapport à l'autre plaque (10).

4. Un frein selon la revendication 3, dans lequel l'organe formant noyau est formé d'une seule pièce avec ladite plaque de pression.

5. Un frein selon l'une quelconque des revendications précédentes, comprenant des moyens pour fournir du liquide de refroidissement au boîtier (1), en relation de refroidissement avec lesdites surfaces, l'organe rotatif fournissant au moins une partie d'un chemin (23, 24) servant à diriger du liquide ayant été introduit au boîtier en direction d'une région d'où le liquide introduit est appliqué sur lesdites surfaces de freinage.

6. Un frein selon la revendication 5, dans lequel l'organe rotatif (2) à freiner est relié en entraînement à au moins un élément de friction, via un organe intermédiaire (4) qui fournit une partie (25) supplémentaire dudit chemin servant à diriger du liquide introduit vers ladite région.

7. Un frein selon la revendication 6, dans lequel l'organe rotatif est un arbre (2) et l'organe intermédiaire est une douille (4) entourant l'arbre et étant claveté sur lui, la douille étant également clavetée sur ledit au moins un élément de friction (7), de manière à être fixée en rotation à l'élément et à permettre un déplacement du au moins un élément le long de l'arbre, la douille ayant en son sein un ou plusieurs passages (25) faisant partie dudit chemin.

8. Un frein selon la revendication 7, dans lequel les passages de douille (25) s'étendent globalement radialement à travers la paroi périphérique de douille.

9. Un frein selon la revendication 7 ou la revendication 8, dans lequel l'arbre comprend un passage (25) s'étendant axialement, faisant partie dudit chemin.

10. Un frein selon la revendication 9, dans lequel ledit refroidissement est délivré par une extrémité de l'arbre audit passage s'étendant axialement, à l'aide d'un dispositif d'étanchéité (18) comprenant un élément d'étanchéité (22) déplacé contre ladite extrémité d'arbre et entourant l'extrémité adjacente du passage.

11. Un frein selon l'une quelconque des revendications 7 à 10, dans lequel la douille est clavetée à l'arbre par des cannelures réalisées respectivement sur la douille et sur l'arbre, au moins une paire, à engagement mutuel, desdites cannelures formant un passage servant de partie dudit chemin.
